# EUROPEAN PATENT SPECIFICATION

(11) **EP 1 630 689 B1**
(45) Date of publication and mention of the grant of the patent: **07.11.2007**
(21) Application number: 04104084.1
(22) Date of filing: 25.08.2004
(51) Int. Cl.: G06F 17/30

(54) **Method for rendering formatted content on a mobile device**
Methode zum Darstellen von formatierten Inhalten auf einem mobilen Gerät
Procédé de représentation de contenu formaté sur un dispositif mobile

(43) Date of publication of application: 01.03.2006
(73) Proprietor: Research In Motion Limited, Waterloo, Ontario N2L 3W8 (CA)
(72) Inventor: Lazaridis, Mihal, N2T 2K1, Waterloo, (CA)
(74) Representative: Rickard, David John

(56) References cited:
- WO-A-01/75667
- WO-A-02/13176
- WO-A-97/49044
- US-B2- 6 620 205
- SHIMADA T ET AL: "Interactive scaling control mechanism for World-Wide Web systems" COMPUTER NETWORKS AND ISDN SYSTEMS, NORTH HOLLAND PUBLISHING. AMSTERDAM, NL, vol. 29, no. 8-13, September 1997 (1997-09), pages 1467-1477, XP004095341 ISSN: 0169-7552

## Description

The following is directed in general to displaying content on mobile devices, and more particularly to a method for displaying formatted and graphic content on mobile devices having a small screen.

Mobile devices are becoming increasingly popular for business and personal use due to a relatively recent increase in number of services and features that the devices and mobile infrastructures support. Handheld mobile devices, sometimes referred to as mobile stations, are essentially portable computers having wireless capability, and come in various forms. These include Personal Digital Assistants (PDA), cellular phones and smart phones. While their reduced size is an advantage to portability, these mobile devices suffer accordingly from very small user interfaces and, in particular, viewing screens.

One of the services provided by mobile devices and their supporting infrastructures is access to IP networks, and in particular the ability to behave as an HTTP (Hyper Text Transfer Protocol) web client to retrieve and display web pages that have been composed using a markup language such as HTML. Web pages composed with HTML are, however, generally designed for large viewing screens having at least 640x480 pixels, such as those incorporated into desktop computers and laptops. There are provisions available for programs embedded in HTML to detect client screen size and adjust the display of data accordingly. However, it is often extremely difficult for a mobile device to process and render received HTML data effectively on a small screen, because the mobile device must choose which aspects of the HTML data are to be rendered using the limited choice of pixels and which are to be excluded.

Besides HTML, several other formatting languages are available for use in addressing different formatting needs, each having different processing requirements. For instance, it is common practice to use XML to define a formatting method for all Microsoft® Word, Power Point and Adobe documents, etc. Such formatting languages are well known in the art of computer science, starting with SCRIPT, Roff, Nroff, Troff, SGML, GML, and moving towards HTML, XML, HDML, WML and all the other languages that use a specific syntax to display, format and manipulate a set of text that is being conveyed to a user. They can also be called 'mark up' languages as they place tags in the text to allow it to be rendered. Alternatively, XML, SGML and GML define a method to have a separate file that defines the formatting of the data, without directly damaging the original text.

Attempts have been made to provide mobile devices having small screens with formatted content, without requiring the devices to choose which elements of the data should be rendered. As stated above, the alternative protocols and display standards, such as Handheld Device Markup Language (HDML) (presently known as the Wireless Markup Language (WML) of the Wireless Access Protocol or WAP), are available to provide content to devices having reduced screen size, processing and bandwidth capacity. Content providers maintain their content in two different formats, and serve one or the other of the formats depending on the type of client requesting. This dual-format approach, however, requires significantly greater effort on the part of the content provider and additional storage space. Furthermore, content providers are obliged to maintain intelligent servers for detecting the type of client in order to determine which of the formats to serve. Just as the proponents of WML attempted to solve the problem the explosion in the use of XML for formatting every piece of data and for use in data inter-exchange between systems is further complicating the problem.

A method used for providing mobile devices with web content formatted according to HTML is to, in real-time, transcode the HTML content into WML content and, in turn, serve the WML content. To do so also requires a WAP server and a somewhat sophisticated HTML-to-WML transcoding filter. The end result is rarely predictable, however, since perfect transcoding of the rather loose and flexible HTML standard is very difficult to achieve. Another problem to surmount is that HTML pages often include embedded programs designed to be interpreted by the client (such as client-side JavaScript) for display purposes that are often lost during transcoding because they cannot be executed by a WML browser. The above-described difficulties associated with this transcoding approach makes the real-time transcoding of HTML pages into WML an unwieldy process that is of limited benefit. The same is true, in general, of transcoding any formatting language.

WO/0213176 discloses a method and system for displaying visual content such as Web pages, e-mail, e-mail attachments, electronic document and forms, database queries and results, drawings, presentations on a client device using server-side rasterization of such content. Visual content is rendered on a server system, transformed into bitmaps compatible with the display attributes of a client device, and transmitted for display on the client device. The approach is "multi-level" because rendered visual content is represented as a multi-level set of raster representations; and constitutes a "browsing system" because the client and server share data about the source visual content element being browsed. The client performs "multi-level" browsing by downloading additional bit maps (i.e. graphic representations) of selected "zoomed-in" portions of a displayed rastered image, rather than downloading the actual selected portions of the web page, for example, itself.

As would be understood, viewability of large graphic files for maps or other pictures can be frustrating for users also. This is because either the user typically gets merely a scaled down version of the picture, or is left with having to pan and scan the picture if it does not fit fully on their screen.

### General

According to an aspect of the invention, a requested formatted language page (document) is retrieved and rendered as a graphic (such as a JPEG, GIF etc.) sized for display by a requesting device (requestor). The graphic is, in turn, served to the requesting device in response to a request.

Because the page is retrieved and rendered as a graphic prior to being transmitted to the requestor, the requestor need not handle formatting decisions. This advantage is particularly useful for mobile devices having small display screens because the device need only handle the display of a graphic, rather than process a formatted page of data and choose what is or is not to be rendered. An additional benefit is that the multiple requests normally executed by the client (as in the case with an HTML document) to completely render a single page (to collect constituent graphics, text, frames and the like for the page) are made by the transmitting party, and not through the reduced-bandwidth client-server mobile connection. Furthermore, content need not be arranged in a manner that is particular to the display screen used by the requestor, other than its size, either at publication time as required by the dual-format approach or at request time as required by the transcoding approach. In addition, client-side programs embedded in the formatted page can be executed because the page is executed as though it were on a client, prior to rendering as a graphic.

According to an aspect of the invention, there is provided a method of transmitting formatted data from a content delivery server to a mobile station, the method comprising the steps at the content delivery server of retrieving a page of formatted data from a server; rendering said page as a graphic sized for display by said mobile station; subdividing said graphic into portions based on an aspect such as frames or tables of the retrieved page; in response to a request from said mobile station for said page, transmitting said graphic to said mobile station; and in association with said graphic, transmitting subdivision information as an identification of said graphic portions and transmitting at least one hyperlink in said page to said mobile station, said at least one hyperlink being in association with a respective graphic portion, wherein portion numbers identifying said graphic portions for viewing and selecting by a user are displayable on said mobile station.

According to another aspect of the invention, there is provided a system for transmitting formatted data to a mobile station, the system comprising: a content delivery server for retrieving a page of formatted data from a server; said content delivery server having means for rendering said page as a graphic sized for display by said mobile station; and means responsive to a request from said mobile station for said page for transmitting said graphic to said mobile station, said means responsive to a request being arranged to transmit, in association with said graphic, subdivision information as an identification of portions of said graphic and at least one hyperlink in said page to said mobile station, said subdivision information being based on an aspect of the retrieved page such as frames or tables of said page and said at least one hyperlink being in association with a respective graphic portion, wherein the mobile station is arranged such that portion numbers identifying said graphic portions for viewing and selecting by a user are displayable on said mobile station.

These together with other aspects and advantages, which will be subsequently apparent, reside in the details of construction and operation as more fully hereinafter described and claimed, reference being had to the accompanying drawings forming a part hereof, wherein like numerals refer to like parts throughout.

### Brief Description of the Drawings

A detailed description of the preferred embodiment is set forth in detail below, with reference to the following drawings, in which:
Figure 1 is a block diagram of a network environment in which the preferred embodiment may be practiced;
Figure 2 is a block diagram of the basic components of the preferred embodiment of the invention;
Figure 3 is a pictorial view showing an example of web content retrieval;
Figure 4a is a block diagram showing a way of enabling a user to select embedded links or download particular aspects of web content;
Figure 4b is a block diagram showing an alternative way of enabling a user to select embedded links or download particular aspects of web content; and
Figure 5 is a pictorial view showing steps of web content retrieval according to an exemplary embodiment of the invention.

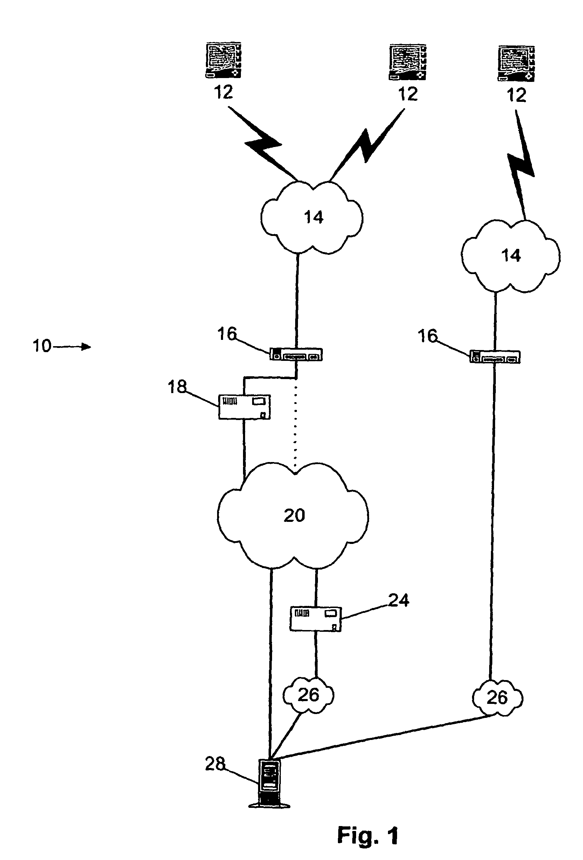

With reference to Figure 1, a block diagram of a network environment 10 in which the preferred embodiment of the invention may be practiced is shown. Network environment 10 includes mobile stations 12 communicating via a wireless network 14 to server 28. While only one server 28 is shown for illustration purposes, it would be understood that network environment 10 could have many such servers. Server 28 can host web sites or graphic download sites, providing access to picture files such as JPEG, TIFF, BMP, PNG, SGI, MP4,MOV, GIF, SVG or other such format. As would be understood by one of ordinary skill in the art, wireless networks 14 might include GSM/GPRS, CDPD, TDMA, iDEN Mobitex, DataTAC networks, or future networks such as EDGE or UMTS and broadband networks like Bluetooth and variants of 802.11.

A connection to a fixed service requires special considerations, and may require special permission as authorized through a Network Access Point (NAP) 16. For generic services, such as web access, a proxy-gateway or Network Address Translator (NAT) 18 may be provided so that a network operator can control and bill for the access. NATs 18 enable management of a limited supply of public Internet addresses for large populations of wireless mobile stations. Solutions offered by a proxy-gateway or NAT 18 can require a complex infrastructure and thus may be managed by a value-added service providers (VASPs), which provide, for instance, WAP gateways, WAP proxy gateway solutions, multi-media messaging servers (MMS) and Internet Multi-Media Services (IMS).

Network operators may also place picture file services directly into network environment 10 by connection directly to NAP 16.

Private Intranet services 26 also connected to Internet 20 may require their own Private Intranet Proxy Gateway 24 for accessing content on server 28. Such private services might include WML access to corporate mail systems, HTML access to CRM databases, or any other services that deliver information as formatted data with links and URLs embedded. As shown, it is possible that a private service 26 may be connected directly to wireless network 14, as opposed to connected via Internet 20.

Used throughout this document for the purpose of describing the preferred embodiment is the example of rendering a web page based on HTML. At the time of writing this document HTML is the prevalent formatting language used on the Internet, but the use of XML is also gaining ground significantly. It will be understood that the use of HTML and web page concepts throughout this document is not meant to limit the graphic rendering method to simply this formatting language only.

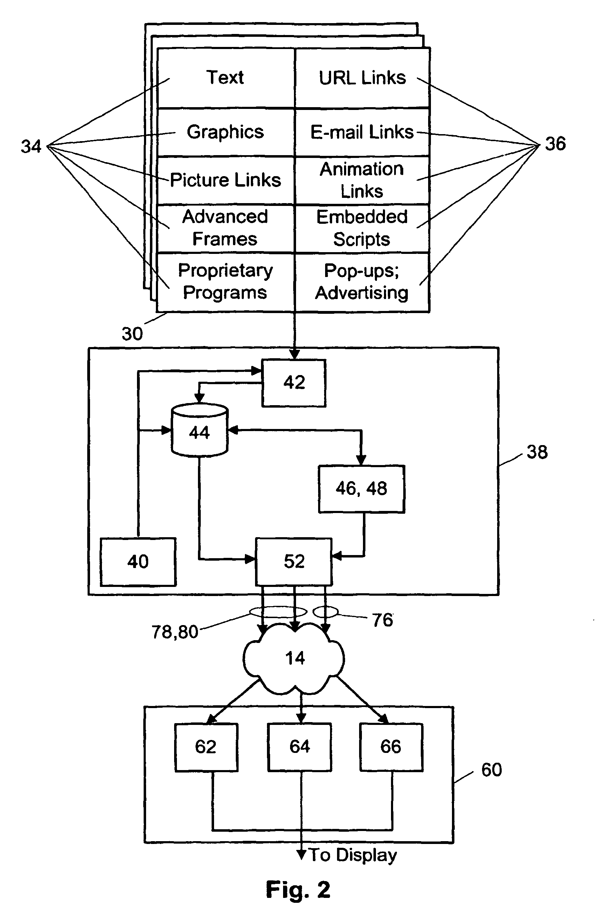

With reference to Figure 2, a block diagram of the basic components of the preferred embodiment of the invention is shown. Web content 30, which may consist of formatted data with links and URLs such as HTML or WML, is stored at least partly in server 28. A Content Delivery Server 38 resides in proxy gateway/NAT service 18 and private Intranet proxy gateway 24. Upon receipt of a request from a requestor such as a mobile device 12 via receiver 40, content retriever 42 of Content Delivery Server 38 retrieves a page of web content 30 from server 28 and stores the page in database 44. As would be understood by one of ordinary skill in the art, a single web page retrieved via HTTP often includes additional directives for initiating HTTP requests to collect constituent elements including frame data, graphics and banners. Content retriever 42 also collects the web page's constituent elements and stores everything in mutual association into database 44. When this is complete, graphic converter 48 collects the web page with its constituent elements from database 44 and renders the entire web page as a graphic 80 such as a JPEG (or other suitable format such as GIF) sized (scaled) for display on mobile device 12. A processor 46 collects hyperlinks 78 from the page of web content 30 and associates the hyperlinks with the ID or filename of the graphic 80. When this is complete, a transmitter 52 transmits graphic 80 and associated hyperlinks 78 via wireless network 14 to Client Content Viewer 60 on mobile station 12.

Processor 46 may choose which web page constituents are to be rendered in graphic form, and which of the hyperlinks 78 to transmit in association with graphic 80. For instance, the web page contents may comprise advertising pop-ups, meta-tag information, or hyperlinked text that when rendered as a small graphic, would be extremely small. To this end, processor 46 operates according to policies that, for instance, specify whether to filter pop-ups out or render them as overlaid images, or to eliminate hyperlinks that, if rendered, would be smaller than a predefined size.

Scaling may be done using standard methods within proxy gateway/NAT service 18 or server 28 or anywhere else as appropriate in the path between mobile station 12 and the content provider. Some of the known image scaling methods include Java class image scaling methods, bicubic interpolation scaling, the bilinear scaling method, radial basis functions (RBF) interpolation, scalable vector graphics (SVG) or one of another possible range of raster, vector MPEG or JPEG scaling methods.

A Client Content Viewer 60 on mobile station 12 receives graphic 80 and its associated hyperlinks 78, and, via a graphic rendering component 62 sends graphic 80 to a display buffer (not shown) for display on a screen 70 of mobile station 12. Via a link interface component 64, Client Content Viewer 60 then provides a user of mobile station 12 with the option of selecting one or more of the hyperlinks 78 via a pop-up menu or the like. It will be understood that mobile station 12 is required only to request a web page 30 and receive graphic 80. To display the web content, it is not required to receive an entire HTML web page and make further HTTP requests to retrieve the constituent elements of the particular web page 30 across the mobile device connection. Content Delivery Server 38 handles retrieving the web page and its constituent elements across what would typically be a higher bandwidth connection, rendering the page as a graphic 80 and sending the graphic 80 to Client Content Viewer 60.

As suggested above, while hyperlinks 78 sent with graphic 80 may provide a user the option to navigate, in some cases graphic 80 will contain a rendering of text or other information that is too small for the user of mobile station 12 to read or take action on (fill out a form etc.). To this end, the following sets forth how Client Content Viewer 60 provides a user with the ability to "zoom-in" on a portion of the web page.

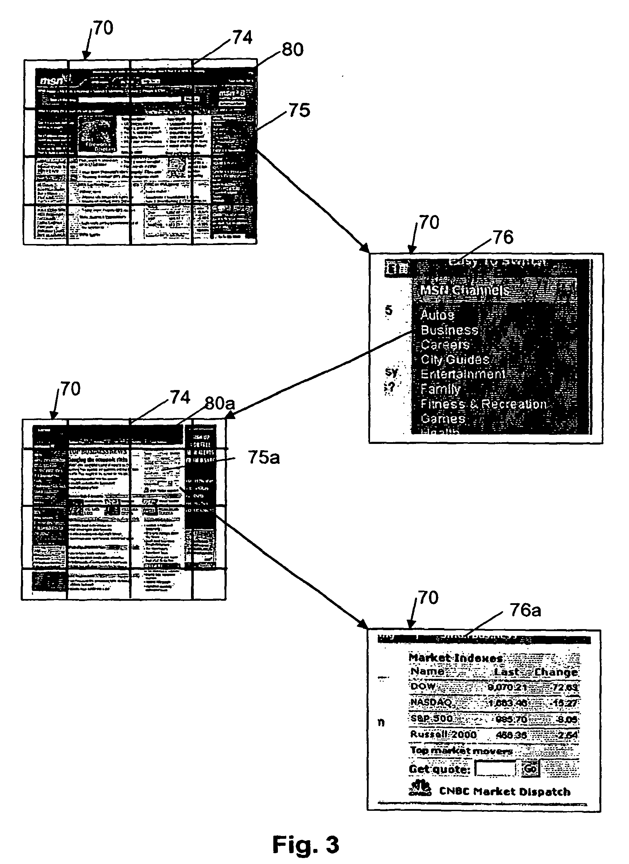

With reference to Figure 3, shown is a pictorial view of an example of web content retrieval. A user can toggle on/off a 4x4 grid 74 over top of graphic 80 when displaying graphic 80 on screen 70. Mobile station screen 70 is shown displaying graphic 80, while grid 74 defines a 4x4 subdivision of graphic 80 into portions 75. As can be seen, graphic 80 has been subdivided by Client Content Viewer 60 into sixteen portions 75. If the user selects the eighth portion 75 (as shown), a second request is initiated to retrieve a corresponding portion 76 of web page 30. This second request will contain an identification of the portion such as the coordinates of portion 76 in the graphic 80, or, if there is a predetermined/standard agreement between the Client Content Viewer 60 and Content Delivery Server 38, a portion number. The second request is received by receiver 40 of Content Delivery Server 38, which initiates the retrieval of the corresponding portion 76 of web page 30 by processor 46. Processor 46 then forwards the portion 76 to transmitter 52 for transmittal to Client Content Viewer 60. Client Content Viewer 60 receives and displays portion 76 as a web page (not a graphic) via web page rendering component 66. As one would be able to do with a typical web page in a browser, a user may then perform any action on the portion 76 as though it were the full web page 30, limited only by the input interface of mobile device 12. As shown in Figure 3, one of those actions may be to select a hyperlink on portion 76.

When a user selects a hyperlink on portion 76, a corresponding request is sent to Content Delivery Server 38 for the web content. As described above, Content Delivery Server 38 returns a corresponding graphic, which Client Content Viewer 60 accordingly subdivides and displays (80a) on screen 70. A further request to Content Delivery Server 38 for a portion 76a of the new page is initiated upon selection of portion 75a of displayed graphic 80a. Portion 76a is returned to Client Content Viewer 60 and displayed via web page rendering component 66, as would be a typical web page, on screen 70.

By transmitting the requested content in two steps, the user is provided with an accurate view of an entire web page, but has the option of "zooming in" on a region of the requested page in order to view it or perform an action on it. No HTML-to-WML transcoding of the web page is required and there is no requirement to create and store both an HTML and a WML page for the same content.

With reference again to Figure 2, typical web content 30 may be divided into the two general classes of passive content 34 and active content 36. To provide increased performance upon receipt of a request, passive content 34, which generally includes information that can be directly rendered such as basic text drawings and frames, might be retrieved by Content Delivery Server 38 prior to receipt of a request. When such a request is received by Content Delivery Server 38, it need only retrieve active content 36, such as embedded scripts and links, to render the completed web page 30 as graphic 80.

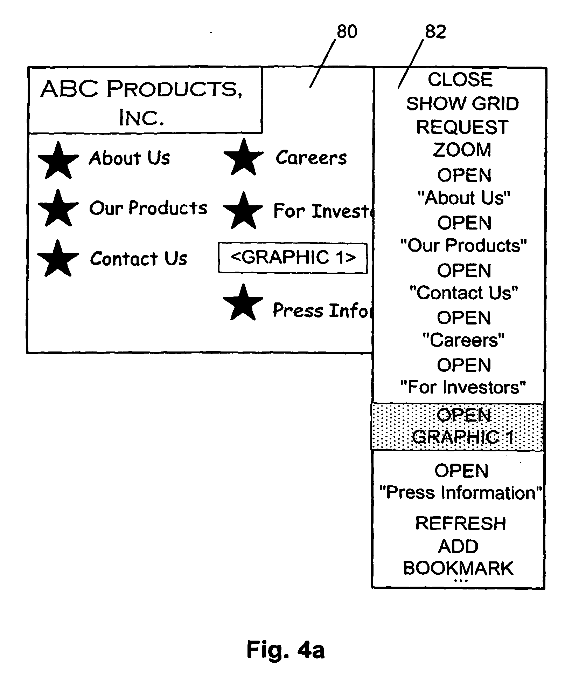

As previously stated, hyperlinks 78 can be sent in association with graphic 80 to Client Content Viewer 60 which can, in turn, provide a user with the ability to initiate requests by selecting one of hyperlinks 78. Figure 4a is a block diagram showing how a user may select embedded links or download particular aspects of web content. All hyperlinks 78 for displayed graphic 80 are shown in a single menu 82. As set forth above, Content Delivery Server 38 collects hyperlinks 78 from web page 30 and associates hyperlinks 78 with the ID or filename of the graphic, for transmitting to Client Content Viewer 60. All or some of the hyperlinks 78 are sent along with graphic 80, and may be selected by the user at any time.

To increase performance, a web page graphic 80 and its associated hyperlinks 78 are cached by Content Delivery Server 38 so that a subsequent request will result in the immediate delivery of a corresponding graphic 80. This function behaves similarly to proxy servers in typical web service environments. In addition, Client Picture Viewer 60 saves the date and time of receipt of graphic 80 and sends it to Content Delivery Server 38 for checking changes in content, as is typical of caching in wireless environments.

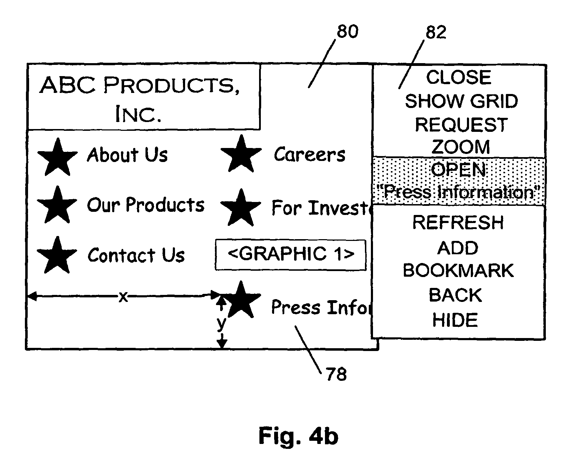

Figure 4b is a block diagram showing an alternative way of enabling a user to select embedded links or download particular aspects of web content when a Client Content Viewer 60 is displaying a graphic 80 of a web page 30. Screen 70 displays graphic 80, with hyperlinks 78. In this embodiment, hyperlinks 78 have been associated by Content Delivery Server 38 with particular coordinates of graphic 80. Using graphical methods such as those found in Scalable Vector Graphics (SVG), the X and Y coordinates of a mouse or cursor on screen 70 can be determined by Client Picture Viewer 60. This enables a user to position a mouse or cursor over points in the graphic to display a menu 82 having the option of selecting a corresponding hyperlink 78 or other active section of the page. When the user's mouse or cursor passes over a particular coordinate corresponding to a particular hyperlink 78 associated with that coordinate, menu 82 pops up and the user can select that hyperlink. It will be understood that the additional flexibility provided by this embodiment affords the user the ability to select links 78 without having to select a portion 75 of the graphic.

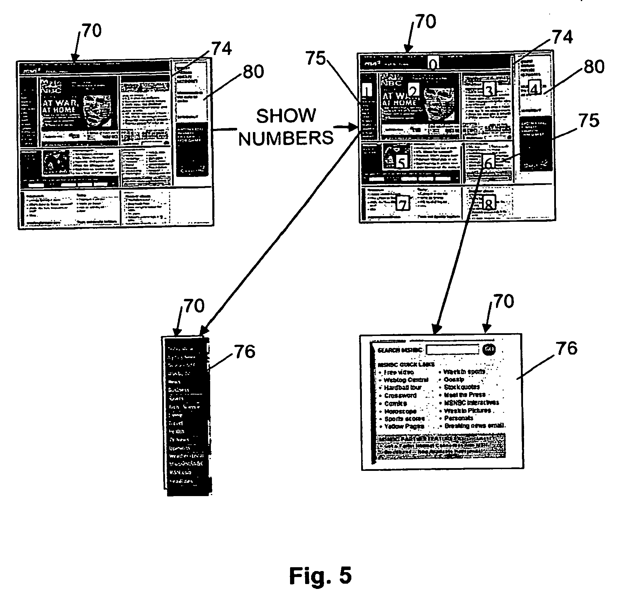

With reference to Figure 5, a pictorial view showing steps of web content retrieval according to an alternate embodiment of the invention is shown. As can be seen, grid 74 defining graphic portions 75 is established by the Content Delivery Server 38 (not Client Content Viewer 60) based on an aspect of the web page content 30 - in particular its frames. In this case, subdivision information is transmitted in association with graphic 80 to Client Content Viewer 60, which is relieved of having to subdivide graphic 80. This alternative enables hyperlinks 78 to be associated with respective such portions 75, so that a user of mobile device 12 has the option of viewing only those hyperlinks 78 that are from a particular portion 76 of a page 30, without the requirement of client content viewer 60 having to track x-y coordinates. Also shown in Figure 5 is the effect of an ON/OFF toggle of portion numbers, for viewing and selecting by a user. The ON/OFF toggle may be enabled through a keystroke, mouse movement, menu selection, touch screen activity or some other user input method.

Many concepts described herein with reference to the preferred embodiment and other examples are generally applicable to retrieval of picture files from server 28, for instance. In this example, a requested graphic file is simply scaled using one of the aforementioned methods and delivered to Client Content Viewer 60. A grid 74 as described is overlaid based on one of a predetermined subdivision agreement, an aspect of the graphic itself or a set of coordinates. In order to zoom in, a user chooses a portion 75, triggering Content Delivery Server to process or retrieve a portion of graphic file sized for display on screen 70 of mobile station 12. Client Content Viewer 60 in this case does not need to display formatted content at all. In association with the scaled graphic or portion 75 thereof, subdivision information may be sent to Client Content Viewer 60 so it can enable a user to select one of the portions 75. It is also conceivable that hybrid web-linkable graphics may be transmitted such the Client Content Viewer 60 need only display a graphic or portion thereof (rather than a portion of an actual web page), but enable the user to select hyperlinks based on the graphic or a particular portion.

When a portion 75 is transmitted to Client Content Viewer 60, it may also have transmitted in association an identification of its own subdivisions/portions, for continued zooming in. This depends of course on the original size of the graphic file and the extent to which such a service may be offered.

The many features and advantages of the invention are apparent from the detailed specification and, thus, it is intended by the appended claims to cover all such features and advantages of the invention that fall within the scope of the invention. Further, since numerous modifications and changes will readily occur to those skilled in the art, it is not desired to limit the invention to the exact operation illustrated and described, and accordingly all suitable modifications and equivalents may be resorted to, falling within the scope of the invention.

For example, when transmitting graphic 80 of a web page to Client Content Viewer 60, the HTML data for the web page and its constituent elements can coincidentally be sent in association with graphic 80. Then, if a user selects a portion of graphic 80 to initiate a request to retrieve a corresponding portion 76 of the web page 30, the HTML data coincidentally sent with graphic 80 can be used by Client Content Viewer 60 to provide a user with the corresponding web page portion 76, without initiating an additional request across network 14.

As set forth above, when subdivisions of graphic 80 of a web page are established by Content Delivery Server 38, they may be established in accordance with an aspect of the web page itself (such as its frames as described above, tables or sections). Alternatively, subdivisions may be established by Content Delivery Server 38 in the form of a grid or according to some other criterion as described above by Client Content Viewer 60.

While Content Delivery Server 38 has been described as operating on proxy gateway/NATs 18 or private Intranet proxy gateway 24, it will be understood that it may be operated on server 28, or at another advantageous point in the path between server 28 and requesting mobile device 12. It is advantageous, however, that Content Delivery Server 38 be supported by functions enabling Content Delivery Server 38 to ascertain the size of the mobile device screen 70 so that graphic 80 is rendered in the appropriate size.

It will be understood that the methods disclosed herein are applicable for use with formatting languages other than HTML, such as the others described earlier in this document. As would be understood by one of ordinary skill in the art, each language will have its own rules for rendering, and must be handled in accordance with those rules. For instance, with XML content there can also be Document Type Definition (DTD) to be fetched that describes the tags used by XML to render a document.

## Claims

1. A method of transmitting formatted data from a content delivery server (3 8) to a mobile station (12), the method comprising the steps at the content delivery server (38) of:
retrieving a page (30) of formatted data from a server (28);
rendering said page as a graphic (80) sized for display by said mobile station (12);
subdividing said graphic (80) into portions (75) based on an aspect such as frames or tables of the retrieved page (30);
in response to a request from said mobile station (12) for said page (30), transmitting said graphic (80) to said mobile station (12); and
in association with said graphic (80), transmitting subdivision information as an identification of said graphic portions (75) and transmitting at least one hyperlink (78) in said page (30) to said mobile station (12), said at least one hyperlink (78) being in association with a respective graphic portion (75),
wherein portion numbers identifying said graphic portions (75) for viewing and selecting by a user are displayable on said mobile station (12).

2. The method of claim 1, wherein said step of retrieving a page (30) of formatted data from a server (28) is carried out by said content delivery server (38) in response to said content delivery server (38) receiving the request for said page of formatted data from the mobile station (12).

3. The method of claim 1 or claim 2, further comprising:
receiving an additional request from said mobile station (12) for a portion (76) of said page (30) by selection of a portion number of a portion (75) of said graphic (80); and
transmitting said portion of said page to said mobile station (12) in response to said additional request.

4. The method of claim 3, wherein said additional request comprises a predetermined identification of said portion of said page.

5. The method of any one of claims 1 to 4, further comprising:
in association with said identification of said portions (75) of said graphic (80), transmitting hyperlinks (78) in corresponding portions (76) of said page (30) to said mobile station (12).

6. The method of any one of claims 1 to 7 5, further comprising:
in association with said graphic (80), transmitting said page (30) to said mobile station (12) in response to said request

7. The method of claim 1 further comprising the steps at the mobile station (12) of:
requesting a page (30) of formatted data from the content delivery server (38);
in response to said request, receiving a graphic (80) rendering of said page (30) from said server (38);
displaying said graphic (80);
in association with said graphic (80), receiving from said server (38) said subdivision information and said at least one hyperlink (78); and
providing a user of the mobile station (12) with an option to view said at least one hyperlink (78) in response to a selection by said user of a portion number of said-respective graphic portion (75).

8. The method of claim 7, further comprising:
selecting a portion number of a portion (75) of said graphic (80);
in response to said selection, transmitting a second request to said content delivery server (38) for a portion (76) of said page (30) corresponding to said selected portion (75) of said graphic (80);
in response to said second request, receiving from said content delivery server (38) said portion (76) of said page (30); and
displaying said portion of said page.

9. A system for transmitting formatted data to a mobile station (12), the system comprising:
a content delivery server (38) for retrieving a page (30) of formatted data from a server (28);
said content delivery server (38) having means for rendering said page as a graphic (80) sized for display by said mobile station (12); and
means responsive to a request from said mobile station (12) for said page (30) for transmitting said graphic (80) to said mobile station (12), said means responsive to a request being arranged to transmit, in association with said graphic (80), subdivision information as an identification of portions (75) of said graphic (80) and at least one hyperlink (78) in said page (30) to said mobile station (12), said subdivision information being based on an aspect of the retrieved page (30) such as frames or tables of said page (30) and said at least one hyperlink (78) being in association with a respective graphic portion (75),
wherein the mobile station (12) is arranged such that portion numbers identifying said graphic portions (75) for viewing and selecting by a user are displayable on said mobile station (12).

10. The system of claim 9, wherein the mobile station comprises:
means for requesting a page (30) of formatted data from the content delivery server (38);
means for receiving a graphic (80) rendering of said page (30) from said server (38) in response to said request;
means for displaying said graphic (80);
means for receiving from said server (38) in association with said graphic (80) said subdivision information and said at least one hyperlink (78); and
means for providing a user of the mobile station (12) with an option to view said at least one hyperlink (78) in response to a selection by said user of a portion number of said respective graphic portion (75).

11. A machine readable medium containing computer code executable by a processor of the system of claim 9 or claim 10 for implementing the method of any of claims 1 to 8.

12. A wireless communications system comprising a system of claim 9 or claim 10 and a plurality of mobile stations (12).

## Patentansprüche

1. Verfahren zum Übertragen formatierter Daten von einem Content-Delivery-Server (38) an eine Mobilstation (12), wobei das Verfahren folgende Schritte am Content-Delivery-Server (38) umfasst:
Abrufen einer Seite (30) formatierter Daten von einem Server (28);
Darstellen dieser Seite als Grafik (80) in einer passenden Größe zur Anzeige auf der Mobilstation (12);
Unterteilen der Grafik (80) in Abschnitte (75) anhand eines Aspekts wie etwa Rahmen oder Tabellen der abgerufenen Seite (30);
Senden der Grafik (80) and die Mobilstation (12) als Reaktion auf eine Anforderung der betreffenden Seite (30) durch die Mobilstation (12); und
zusammen mit der Grafik (80), Senden der Unterteilungsinformationen als Kennung der Grafikabschnitte (75) zusammen mit mindestens einem Hyperlink (78) in der betreffenden Seite (30) an die Mobilstation (12), wobei der mindestens eine Hyperlink (78) einem entsprechenden Grafikabschnitt (75) zugeordnet ist;
wobei Abschnittsnummern, welche die Grafikabschnitte (75) für die Ansicht und Auswahl durch einen Benutzer identifizieren, auf der Mobilstation (12) angezeigt werden können.

2. Verfahren gemäß Anspruch 1, bei dem der Schritt des Abrufens einer Seite (30) formatierter Daten von einem Server (28) durch den Content-Delivery-Server (38) erfolgt, nachdem der Content-Delivery-Server (38) die Anforderung der betreffenden Seite formatierter Daten von der Mobilstation (12) empfangen hat.

3. Verfahren gemäß Anspruch 1 oder 2, welches ferner umfasst:
Empfangen einer weitere Anforderung von der Mobilstation (12) über einen Abschnitt (76) der betreffenden Seite (30), indem eine Abschnittsnummer eines Abschnitts (75) der Grafik (80) ausgewählt wird; und
Senden des betreffenden Abschnitts der Seite an die Mobilstation (12) als Reaktion auf die weitere Anforderung.

4. Verfahren gemäß Anspruch 3, wobei die weitere Anforderung eine vorab festgelegte Kennung des betreffenden Abschnitts der Seite enthält.

5. Verfahren gemäß einem der Ansprüche 1 bis 4, welches ferner umfasst:
Zusammen mit der Kennung der betreffenden Abschnitte (75) der Grafik (80), das Senden von Hyperlinks (78) in entsprechenden Abschnitten (76) der Seite (30) an die Mobilstation (12).

6. Verfahren gemäß einem der Ansprüche 1bis 5, welches ferner umfasst:
Zusammen mit der Grafik (80), das Senden der Seite (30) an die Mobilstation (12) als Reaktion auf die Anforderung.

7. Verfahren gemäß Anspruch 1, welches ferner folgende Schritte an der Mobilstation umfasst:
Anfordern einer Seite (3) formatierter Daten von dem Content-Delivery-Server (38);
Empfangen einer Grafik (80) welche die betreffende Seite (30) darstellt, als Reaktion auf diese Anforderung von dem Server (38);
Anzeige der Grafik (80);
zusammen mit der Grafik (80), Empfangen der Unterteilungsinformationen und dem mindestens einen Hyperlink (78) vom Server (38); und
Bereitstellen einer Option für den Benutzer zum Ansehen des mindestens einen Hyperlinks (78) an der Mobilstation (12), nachdem der Benutzer eine Abschnittsnummer des betreffenden Grafikabschnitts (75) ausgewählt hat.

8. Verfahren gemäß Anspruch 7, welches ferner umfasst:
Auswählen einer Abschnittsnummer eines Abschnitts (75) der Grafik (80);
als Reaktion auf diese Auswahl, das Senden einer zweite Anforderung über einen Abschnitt (76) der Seite (30), der dem ausgewählten Abschnitt (75) der Grafik (80) entspricht, an den Content-Delivery-Server (38);
als Reaktion auf diese zweite Anforderung, das Empfangen des betreffenden Abschnitts (76) der Seite (30) von dem Content-Delivery-Server (38); und
Anzeigen dieses Abschnitts der Seite.

9. System zum Übertragen formatierter Daten an eine Mobilstation (12), wobei das System umfasst:
einen Content-Delivery-Server (38) zum Abrufen einer Seite (30) formatierter Daten von einem Server (28),
wobei dieser Content-Delivery-Server (38) Mittel besitzt, die Seite als eine Grafik (80) in einer passenden Größe für die Anzeige durch die Mobilstation (12) darzustellen; und
Mittel besitzt, welche auf eine Anforderung der Seite (30) durch die Mobilstation (12) reagieren, um die Grafik (80) an die Mobilstation (12) zu senden, wobei die auf die Anforderung reagierende Mittel dafür ausgelegt sind, zusammen mit der Grafik (80) Unterteilungsinformationen als Kennung von Abschnitten (75) der Grafik (80) sowie mindestens einen Hyperlink (78) in der Seite (30) an die Mobilstation (12) zu senden, wobei die Unterteilungsinformationen auf einem Aspekt der abgerufenen Seite (30) basieren, etwa Rahmen oder Tabellen der Seite (30), und der mindestens eine Hyperlink einem jeweiligen Grafikabschnitt (75) zugeordnet ist,
wobei die Mobilstation (12) so ausgelegt ist, dass Abschnittsnummern, die die einzelnen Grafikabschnitte (75) für die Ansicht und Auswahl durch einen Benutzer kennzeichnen, auf der Mobilstation (12) angezeigt werden können.

10. System gemäß Anspruch 9, wobei die Mobilstation umfasst:
Mittel zum Anfordern einer Seite (30) formatierter Daten von dem Content-Delivery-Server (38);
Mittel zum Empfangen einer Grafik (80), welche die betreffende Seite (30) von dem Server (38) darstellt, als Reaktion auf die Anforderung;
Mittel zum Anzeigen der Grafik (80);
Mittel zum Empfangen der Unterteilungsinformationen und des mindestens einen Hyperlinks (78) zusammen mit der Grafik (80) von dem Server (38); und
Mittel zum Bereitstellen einer Option zum Ansehen des mindestens einen Hyperlinks (78) für einen Benutzer der Mobilstation (12), nachdem der Benutzer eine Abschnittsnummer des jeweiligen Grafikabschnitts (75) ausgewählt hat.

11. Maschinenlesbarer Datenträger, der von einem Prozessor des Systems gemäß Anspruch 9 oder 10 ausführbaren Computercode enthält, um das Verfahren gemäß einem der Ansprüche 1 bis 8 zu implementieren.

12. Drahtloses Kommunikationssystem, welches ein System gemäß Anspruch 9 oder 10 und eine Vielzahl von Mobilstationen (12) umfasst.

## Revendications

1. Procédé de transmission de données formatées en provenance d'un serveur de diffusion de contenu (38) à une station mobile (12), le procédé comprenant les étapes suivantes au niveau du serveur de diffusion de contenu (38) :
extraction d'une page (30) de donnés formatées à partir d'un serveur (28) ;
rendu de ladite page sous forme d'un graphique (80) dimensionné de telle sorte qu'il puisse être affiché par ladite station mobile (12) ;
subdivision dudit graphique (80) en parties (75) en fonction d'un aspect, tel des cadres ou des tableaux, de la page extraite (30) ;
suite à une demande de ladite station mobile (12) pour ladite page (30), transmission dudit graphique (80) à ladite station mobile (12) ; et
en association avec ledit graphique (80), transmission d'informations de subdivision en tant qu'identification desdites parties de graphique (75) et transmission d'au moins un lien hypertexte (78) dans ladite page (30) à ladite station mobile (12), ledit au moins un lien hypertexte (78) étant associé à une partie de graphique respective (75),
dans lequel les numéros de partie identifiant lesdites parties de graphique (75) destinées à être visualisées et sélectionnées par un utilisateur peuvent être affichés sur ladite station mobile (12).

2. Procédé selon la revendication 1, dans lequel ladite étape d'extraction d'une page (30) de données formatées en provenance d'un serveur (28) est effectuée par ledit serveur de diffusion de contenu (38) après réception par ce dernier de la demande pour ladite page de données formatées en provenance de la station mobile (12).

3. Procédé selon la revendication 1 ou la revendication 2, comprenant en outre :
la réception d'une demande supplémentaire en provenance de ladite station mobile (12) pour une partie (76) de ladite page (30) par la sélection d'un numéro de partie d'une partie (75) dudit graphique (80) ; et
la transmission de ladite partie de ladite page à ladite station mobile (12) suite à ladite demande supplémentaire.

4. Procédé selon la revendication 3, dans lequel ladite demande supplémentaire comprend une identification prédéterminée de ladite partie de ladite page.

5. Procédé selon l'une quelconque des revendications 1 à 4, comprenant en outre :
en association avec ladite identification desdites parties (75) dudit graphique (80), la transmission de liens hypertextes (78) dans des parties (76) correspondantes de ladite page (30) à ladite station mobile (12).

6. Procédé selon l'une quelconque des revendications 1 à 5, comprenant en outre :
en association avec ledit graphique (80), la transmission de ladite page (30) à ladite station mobile (12) suite à ladite demande.

7. Procédé selon la revendication 1, comprenant en outre les étapes suivantes au niveau de la station mobile (12) :
demande d'une page (30) de donnés formatées au serveur de diffusion de contenu (38) ;
suite à ladite demande, réception d'un rendu graphique (80) de ladite page (30) en provenance dudit serveur (38) ;
affichage dudit graphique (80) ;
en association avec ledit graphique (80), réception en provenance dudit serveur (38) desdites informations de subdivision et dudit au moins un lien hypertexte (78) ; et
proposition à un utilisateur de la station mobile (12) d'une option permettant de visualiser ledit au moins un lien hypertexte (78) suite à une sélection par ledit utilisateur d'un numéro de partie de ladite partie de graphique respective (75).

8. Procédé selon la revendication 7, comprenant en outre :
la sélection d'un numéro de partie d'une partie (75) dudit graphique (80) ;
suite à ladite sélection, la transmission d'une deuxième demande audit serveur de diffusion de contenu (38) pour une partie (76) de ladite page (30) correspondant à ladite partie (75) sélectionnée dudit graphique (80) ;
suite à ladite deuxième demande, la réception en provenance dudit serveur de diffusion de contenu (38) de ladite partie (76) de ladite page (30) ; et
l'affichage de ladite partie de ladite page.

9. Système de transmission de données formatées à une station mobile (12), le système comprenant :
un serveur de diffusion de contenu (38) permettant d'extraire une page (30) de donnés formatées à partir d'un serveur (28) ;
ledit serveur de diffusion de contenu (38) disposant de moyens permettant de rendre ladite page sous forme d'un graphique (80) dimensionné de telle sorte qu'il puisse être affiché par ladite station mobile (12) ; et
des moyens réagissant à une demande de ladite station mobile (12) pour ladite page (30) et permettant de transmettre ledit graphique (80) à ladite station mobile (12), lesdits moyens réagissant à une demande étant aptes à transmettre, en association avec ledit graphique (80), des informations de subdivision en tant qu'identification de parties (75) dudit graphique (80), et au moins un lien hypertexte (78) dans ladite page (30) à ladite station mobile (12), lesdites informations de subdivision se basant sur un aspect de la page extraite (30), tel des cadres ou des tableaux de ladite page (30), et ledit au moins un lien hypertexte (78) étant associé à une partie de graphique respective (75),
dans lequel la station mobile (12) est adaptée de telle sorte que des numéros de partie identifiant lesdites parties de graphique (75) destinées à être visualisées et sélectionnées par un utilisateur peuvent être affichés sur ladite station mobile (12).

10. Système selon la revendication 9, dans lequel la station mobile comprend :
des moyens de demande d'une page (30) de donnés formatées au serveur de diffusion de contenu (38) ;
des moyens de réception d'un rendu graphique (80) de ladite page (30) en provenance dudit serveur (38) suite à ladite demande ;
des moyens d'affichage dudit graphique (80) ;
des moyens de réception en provenance dudit serveur (38), en association avec ledit graphique (80), desdites informations de subdivision et dudit au moins un lien hypertexte (78) ; et
des moyens de proposition à un utilisateur de la station mobile (12) d'une option permettant de visualiser ledit au moins un lien hypertexte (78) suite à une sélection par ledit utilisateur d'un numéro de partie de ladite partie de graphique respective (75).

11. Support lisible par machine contenant un code informatique pouvant être exécuté par un processeur du système selon la revendication 9 ou la revendication 10 et permettant de mettre en oeuvre le procédé selon l'une quelconque des revendications 1 à 8.

12. Système de communication sans fil comprenant un système selon la revendication 9 ou la revendication 10 et une pluralité de stations mobiles (12).
